# EUROPEAN PATENT APPLICATION

(11) **EP 3 008 992 A1**
(43) Date of publication of application: **20.04.2016**
(21) Application number: 14810888.9
(22) Date of filing: 08.05.2014
(51) Int. Cl.: A01K 1/015, B65D 25/04

(54) **ANIMAL EXCREMENT-PROCESSING MATERIAL PACKAGE AND ANIMAL EXCREMENT-PROCESSING MATERIAL CONTAINER**

(30) Priority: 12.06.2013 JP 2013123907
(71) Applicant: Uni-Charm Corporation, Ehime 799-0111 (JP)
(72) Inventor: TAKAGI, Chiyo, Kanonji-shi Kagawa 769-1602 (JP); IKEGAMI, Takeshi, Kanonji-shi Kagawa 769-1602 (JP)
(74) Representative: Dolleymores
(86) International application number: PCT/JP2014/062397
(87) International publication number: WO 2014/199751

(57) **Abstract**

[Problem] To provide a more logical construction technology relating to animal excrement-processing material packages and animal excrement-processing material containers. [Solution] An animal excrement-processing material package (100) having animal excrement-processing material (700) and a container (200), wherein the container (200): extends in a first direction (200Y) and a second direction (200X) that is defined by a direction that intersects with the first direction (200Y); and has a separating partition (300), which is formed in the housing region (210) and has a component that extends in the second direction (200X).

## Description

### TECHNICAL FIELD

The present invention relates to a package and a container for animal excrement disposal materials.

### BACKGROUND ART

Conventionally, granular animal excrement disposal materials are used especially for disposal of excrement of indoor pets. A package for animal excrement disposal materials includes animal excrement disposal materials and a container for containing the animal excrement disposal materials. The package for animal excrement disposal materials may be sold in a store or kept by a user. The package of this kind is disclosed, for example, in U. S. Patent No. 4448151.

In the package for animal excrement disposal materials disclosed in USP No. 4448151, two different kinds of animal excrement disposal materials are contained in a container. The package of this kind is subjected to various vibrations during the time from factory shipment until it is displayed at a store and purchased by a user. As a result, animal excrement disposal materials having a smaller particle size are arranged in a lower layer and those having a larger particle size are arranged in an upper layer in the container.

In such a condition, it is assumed that a user uses the animal excrement disposal materials in the container several times. Comparing the first and next animal excrement disposal materials taken out of the container, the first ones have a larger average particle size than the next ones. Generally, an arbitrary amount of the animal excrement disposal materials of this type are transferred into a plate-like container by a user and the container is placed on a certain place such as floor. Due to the difference in the average particle size between the first and second animal excrement disposal materials to be taken out, the first and second animal excrement disposal materials have different conditions when transferred into the plate-like container.

Specifically, compared with the first animal excrement disposal materials taken out first, the second animal excrement disposal materials taken out next have a smaller average particle size, so that a space formed between the second animal excrement disposal materials is smaller. Therefore, when absorbing excrement, the first and second animal excrement disposal materials exhibit different absorbing states.

### PRIOR ART DOCUMENT

### PATENT DOCUMENT

Patent Document 1: US 4448151

### SUMMARY OF THE INVENTION

### PROBLEM TO BE SOLVED BY THE INVENTION

Accordingly, it is an object of the present invention to provide a more rational constructing technique relating to a package and a container for animal excrement disposal materials.

### MEANS FOR SOLVING THE PROBLEM

In order to solve the above-described problem, according to a preferred aspect of the present invention, a package for animal excrement disposal materials is provided which includes granular animal excrement disposal materials and a container for containing the animal excrement disposal materials.

The container extends in an upward direction and a downward direction in a placed state of the container, a first direction defined by the upward direction and the downward direction, and a second direction defined by a direction crossing the first direction.

The container includes a container region for containing the animal excrement disposal materials, an inner wall which defines the container region, and a partition wall which is formed in the container region and has an extending component in the second direction.

In a further aspect of the package for animal excrement disposal materials according to the present invention, the partition wall has a free end which is not connected to the inner wall, a first partition wall surface on an upper side (in the upward direction) and a second partition wall surface on a side opposite to the first partition wall surface.

The container region has a region above the partition wall or above the first partition wall surface and a region other than above the partition wall or other than the region above the partition wall.

In a further aspect of the package for animal excrement disposal materials according to the present invention, the animal excrement disposal materials include first granules disposed in the region above the partition wall and second granules disposed in the region other than above the partition wall, and the first granules have a larger average particle size than the second granules.

In a further aspect of the package for animal excrement disposal materials according to the present invention, the first partition wall surface has an inclined component in the second direction.

In a further aspect of the package for animal excrement disposal materials according to the present invention, the second partition wall surface has an inclined component in the second direction.

In a further aspect of the package for animal excrement disposal materials according to the present invention, the partition wall has a proximal end adjacent to the inner wall, and a distal end farther apart from the inner wall than the proximal end.

The container has a first container region on the distal end side as viewed from the proximal end in the second direction, a second container region on the proximal end side as viewed from the distal end in the second direction, and a third container region including a midpoint in the second direction.

In a further aspect of the package for animal excrement disposal materials according to the present invention, the container has an opening for taking out the animal excrement disposal materials.

In a further aspect of the package for animal excrement disposal materials according to the present invention, the opening is formed in the first container region.

In a further aspect of the package for animal excrement disposal materials according to the present invention, the opening is formed in the third container region.

In a further aspect of the package for animal excrement disposal materials according to the present invention, the container has a grip for holding the container.

In a further aspect of the package for animal excrement disposal materials according to the present invention, a plurality of such partition walls are provided.

In order to solve the above-described problem, according to a preferred aspect of the present invention, a container for containing granular animal excrement disposal materials is provided.

The container extends in an upward direction and a downward direction in a placed state of the container, a first direction defined by the upward direction and the downward direction, and a second direction defined by a direction crossing the first direction.

The container includes a container region for containing the animal excrement disposal materials, an inner wall which defines the container region, and a partition wall which is formed in the container region and has an extending component in the second direction.

### EFFECT OF THE INVENTION

According to the present invention, a more rational constructing technique for a package and a container for animal excrement disposal materials can be provided.

### BRIEF DESCRIPTION OF THE DRAWINGS

FIG. 1 is a perspective view showing a package for animal excrement disposal materials according to the present invention.
FIG. 2 is a sectional view showing the package for animal excrement disposal materials.
FIG. 3 is a perspective view showing an animal excrement disposal material according to the present invention.
FIG. 4 is an explanatory drawing showing the package for animal excrement disposal materials.
FIG. 5 is an explanatory drawing showing a package for animal excrement disposal materials according to a first modification of the present invention.
FIG. 6 is an explanatory drawing showing a package for animal excrement disposal materials according to a second modification of the present invention.
FIG. 7 is an explanatory drawing showing a package for animal excrement disposal materials according to a third modification of the present invention.
FIG. 8 is an explanatory drawing showing a package for animal excrement disposal materials according to a fourth modification of the present invention.
FIG. 9 is an explanatory drawing showing a package for animal excrement disposal materials according to a fifth modification of the present invention.
FIG. 10 is an explanatory drawing showing a package for animal excrement disposal materials according to a sixth modification of the present invention.
FIG. 11 is an explanatory drawing showing a package for animal excrement disposal materials according to a seventh modification of the present invention.
FIG. 12 is an explanatory drawing showing a package for animal excrement disposal materials according to an eighth modification of the present invention.
FIG. 13 is an explanatory drawing showing a package for animal excrement disposal materials according to a ninth modification of the present invention.
FIG. 14 is an explanatory drawing showing a package for animal excrement disposal materials according to a tenth modification of the present invention.
FIG. 15 is an explanatory drawing showing the animal excrement disposal material package according to the tenth modification of the present invention.
FIG. 16 is an explanatory drawing showing a package for animal excrement disposal materials according to an 11th modification of the present invention.
FIG. 17 is an explanatory drawing showing a package for animal excrement disposal materials according to a 12th modification of the present invention.
FIG. 18 is an explanatory drawing showing a package for animal excrement disposal materials according to a 13th modification of the present invention.
FIG. 19 is an explanatory drawing showing a package for animal excrement disposal materials according to a 14th modification of the present invention.
FIG. 20 is an explanatory drawing showing a package for animal excrement disposal materials according to a 15th modification of the present invention.
FIG. 21 is an explanatory drawing showing a package for animal excrement disposal materials according to a 16th modification of the present invention.
FIG. 22 is an explanatory drawing showing a package for animal excrement disposal materials according to a 17th modification of the present invention.

### REPRESENTATIVE EMBODIMENT FOR CARRYING OUT THE INVENTION

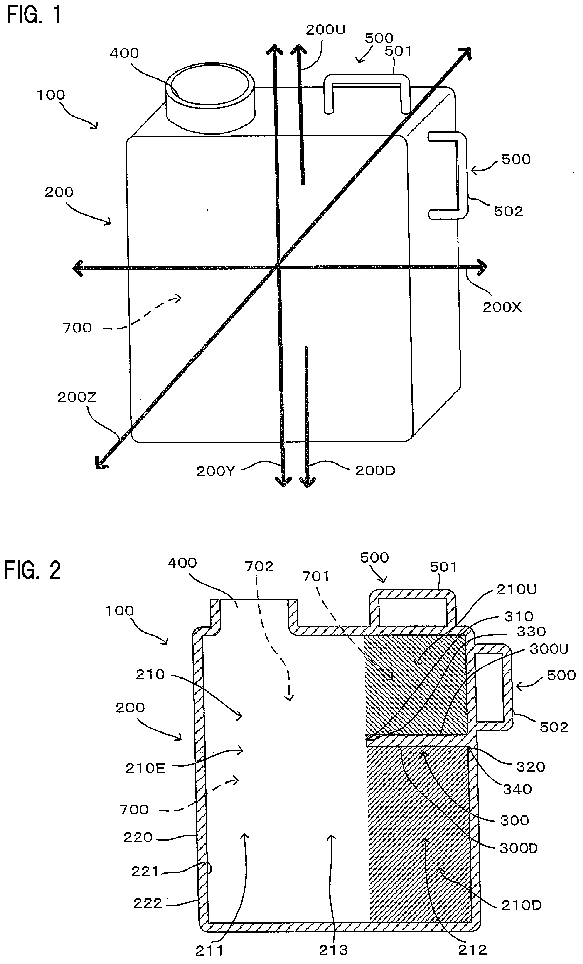

A package and a container for animal excrement disposal materials according to the present invention is now explained with reference to FIGS. 1 to 22. The "animal" in an embodiment of this invention widely includes vertebrates (mammals, reptiles, birds and amphibians) and invertebrates, and typically represents pets such as cats, dogs, rabbits and hamsters.

### (Embodiment)

An embodiment of a package and a container for animal excrement disposal materials according to the present invention is now described with reference to FIGS. 1 to 4.

A package 100 includes a granular animal excrement disposal material 700 and a container 200 for containing a plurality of animal excrement disposal materials 700. The package 100, the animal excrement disposal material 700 and the container 200 are example embodiments that correspond to the "package", the "animal excrement disposal material" and the "container", respectively, according to the present invention.

The container 200 defines an upward direction 200U and a downward direction 200D in a placed state of the container. The container 200 extends in a first direction 200Y defined by the upward direction 200U and the downward direction 200D, a second direction 200X defined by a direction crossing the first direction 200Y and a third direction 200Z defined by a direction crossing the first and second directions 200Y, 200X. The upward direction 200U and the downward direction 200D are example embodiments that correspond to the "upward direction" and the "downward direction", respectively, according to the present invention. The first direction 200Y and the second direction 200X are example embodiments that correspond to the "first direction" and the "second direction", respectively, according to the present invention. Further, the "crossing direction" as used in this invention refers to the "perpendicular" direction".

The container 200 is formed by a wall 220. The wall 220 includes an inner wall 221 and an outer wall 222. The inner wall 221 defines a container region 210 for containing the animal excrement disposal materials 700. The container region 210 has a partition wall 300. The partition wall 300 has an extending component in the second direction 200X. The inner wall 221, the container region 210 and the partition wall 300 are example embodiments that correspond to the "inner wall", the "container region" and the "partition wall", respectively, according to the present invention.

Further, the "extending component in the direction" in this invention is a concept including a region parallel to the direction.

The structure of the partition wall 300 is explained with reference to FIG. 2. FIG. 2 is a sectional view of the package 100 in FIG. 1 as taken along a plane extending in the first and second directions 200Y, 200X and passing through a center of the package 100 in the third direction 200Z.

The partition wall 300 has ends in the second direction 200X, or a free end 310 which is not connected to the inner wall 221 and a connected end 320 which is connected to the inner wall 221. Further, the partition wall 300 has surfaces in the first direction 200Y, or a first partition wall surface 300U on the upper side (in the upward direction 200U) and a second partition wall surface 300D on a side opposite to the first partition wall surface 300U. The free end 310, the first partition wall surface 300U and the second partition wall surface 300D are example embodiments that correspond to the "free end", the "first partition wall surface" and the "second partition wall surface", respectively, according to the present invention.

As described above, the ends of the partition wall 300 in the second direction 200X are defined by the free end 310 and the connected end 320 when the partition wall 300 is connected to the inner wall 221. The ends of the partition wall 300 in the second direction 200X can also be defined by the distance from the inner wall 221. Specifically, the end adjacent to the inner wall 221 can be defined as a proximal end 340, and the end farther apart from the inner wall 221 than the proximal end 340 can be defined as a distal end 330. The proximal end 340 and the distal end 330 are example embodiments that correspond to the "proximal end" and the "distal end", respectively, according to the present invention.

In the package 100 according to this embodiment, the first partition wall surface 300U of the partition wall 300 has an extending component in the second direction 200X, and the second partition wall surface 300D of the partition wall 300 also has an extending component in the second direction 200X. Further, as described below, the first partition wall surface 300U and the second partition wall surface 300D of the partition wall 300 can have various configurations.

Further, ends of the partition wall 300 in the third direction Z are connected to the inner wall 221.

The container region 210 has a region 210U above the partition wall or above the first partition wall surface 300U and a region 210E other than above the partition wall or other than the region 210U above the partition wall. The "region above the first partition wall surface 300U" here refers to a region that is located above the first partition wall surface 300U in the upward direction 200U in a region which is sandwiched between two virtual lines extending parallel to the first direction 200Y and passing through the ends of the partition wall 300 in the second direction 200X. In this sense, the container region 210 has a region 210D below the partition wall or below the second partition wall surface 300D. The region 210D below the partition wall is included in the region 210E other than above the partition wall. The region 210U above the partition wall and the region 210E other than above the partition wall are example embodiments that correspond to the "region above the partition wall" and the "region other than above the partition wall", respectively, according to the present invention.

The container 200 has a first container region 211 on the distal end 330 side as viewed from the proximal end 340 of the partition wall 300 in the second direction 200X, and a second container region 212 on the proximal end 340 side as viewed from the distal end 330 of the partition wall 300 in the second direction 200X. Further, the container 200 has a third container region 213 including a midpoint in the second direction 200X. Specifically, the third container region 213 is a region between the first container region 211 and the second container region 212. As described below, a plurality of partition walls 300 may be formed in one container 200. In such a case, the first, second and third container regions 211, 212, 213 can be defined based on an arbitrarily selected one of the partition walls 300. The first container region 211, the second container region 212 and the third container region 213 are example embodiments that correspond to the "first container region", the "second container region" and the "third container region", respectively, according to the present invention.

The container 200 has an opening 400 for taking out the animal excrement disposal materials 700. The opening 400 is preferably arranged in a region in which the partition wall 300 is not formed in the container 200. Specifically, the opening 400 is formed in the first container region 211 or the third container region 213.

The container 200 has a grip 500 for holding the container 200. The grip 500 is preferably arranged on a region of the container 200 in which the partition wall 300 is formed and the opening 400 is not formed. Specifically, when the opening 400 is formed in the first container region 211, the grip 500 is formed on the second container region 212 or the third container region 213, and when the opening 400 is formed in the third container region 213, the grip 500 is formed on the second container region 212. Further, in the package 100 according to the embodiment of this invention, the grip 500 includes a first grip 501 and a second grip 502. The grip 500 can be formed as a single structure. The grip 500 can have any structure which can be held by users. The structure of the grip 500 can be appropriately selected from known structures of this type to be held by users.

Materials such as synthetic resin and corrugated cardboard may be appropriately selected as the material of the container 200. The container 200 and the partition wall 300 may be integrally formed with each other. Alternatively, the container 200 and the partition wall 300 may be separately formed and then fixed together, for example, by bonding.

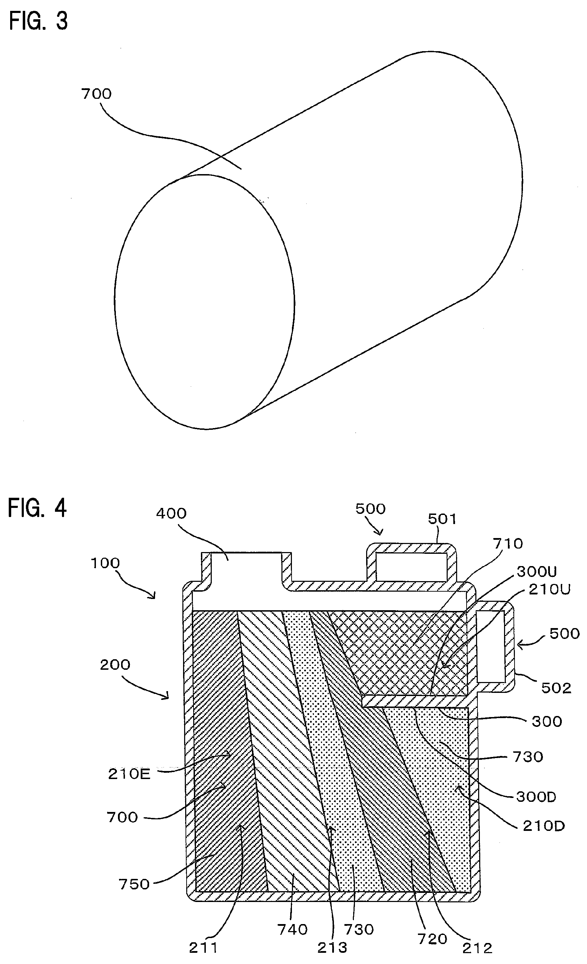

FIG. 3 shows the animal excrement disposal material 700. It is sufficient that a plurality of such excrement disposal materials 700 are disposed in the container 200. As the animal excrement disposal materials 700, various kinds of known animal excrement disposal materials 700 can be appropriately used. The animal excrement disposal materials 700 may include those capable of absorbing animal excrement, those capable of absorbing animal excrement and exhibiting viscosity, thereby bonding the animal excrement disposal materials 700 with each other, and those to be used in combination with a sheet-like absorbent member. The "excrement" used herein widely includes not only urine but body fluids such as saliva and menstrual blood.

Thus, the shape and materials of the animal excrement disposal materials 700 can be appropriately selected from those of known structures. For example, although the animal excrement disposal material 700 shown in FIG. 3 has a cylindrical shape, various shapes such as spherical, elliptical, or polygonal columnar shape can be selected.

Many of the known animal excrement disposal materials 700 are intended for cats. Therefore, the package 100 according to this invention is especially suitable for cats.

The animal excrement disposal materials 700 stored in the container 200 include first granules 701 placed in the region 210U above the partition wall and second granules 702 placed in the region 210E other than above the partition wall. The first granules 701 having almost the same average particle size as the second granules 702 can be selected here, but the first granules 701 may have a larger average particle size than the second granules 702.

Operation of the above-described package 100 is described with reference to FIG. 4. In use, the animal excrement disposal materials 700 packed in the package 100 are filled into a receiving vessel (not shown) which is separately provided by a user. It is assumed here that the package 100 contains four receiving vessels of the animal excrement disposal materials 700.

The animal excrement disposal materials 700 packed in the container 200 form a plurality of regions according to the arrangement positions. Specifically, the animal excrement disposal materials 700 form first to fifth granule regions 710, 720, 730, 740, 750. The first granule region 710 is arranged in a region including the region 210U above the partition wall. The second granule region 720 extends in the first direction 200Y and adjacent to a region of the first granule region 710 facing the first container region 211. The third granule region 730 is formed by a region including the region 210D below the partition wall and a region extending in the first direction 200Y and adjacent to a region of the second granule region 720 facing the first container region 211. Thus, the third granule region 730 includes regions on the both ends of the second granule region 720 in the second direction 200X. The fourth granule region 740 extends in the first direction 200Y and adjacent to a region of the third granule region 730 facing the first container region 211. The fifth granule region 750 extends in the first direction 200Y and adjacent to a region of the fourth granule region 740 facing the first container region 211.

When filling the animal excrement disposal materials 700 into the container 200, the animal excrement disposal materials 700 for the first granule region 710 are the last to be filled. The animal excrement disposal materials 700 which do not greatly vary in the particle size are selected and placed in the first granule region 710.

It is assumed here that the package 100 is subjected to vibration when shipped by manufacturer or when purchased and carried by user. As a result, in the package 100, the animal excrement disposal materials 700 are arranged such that upper materials 700 (in the upward direction 200U) have a larger particle size than lower materials 700 (in the downward direction 200D).

Even in such a condition, the animal excrement disposal materials 700 which do not greatly vary in the particle size are selected for the first granule region 710. Therefore, even if the package 100 is subjected to vibration, the difference of the average particle size between the upper and lower animal excrement disposal materials 700 in the first granule region 710 is smaller than that in the other granule regions.

In such a state, the user holds the grip 500 and tilts the container 200 in order to take out the animal excrement disposal materials 700 through the opening 400. At this time, in a first filling operation into the receiving vessel, part of the animal excrement disposal materials 700 in the first granule region 710 and the animal excrement disposal materials 700 in the second granule region 720 are filled into the receiving vessel.

When an animal excretes on the animal excrement disposal materials 700 in the receiving vessel, the animal excrement disposal materials 700 are disposed of. Then, new animal excrement disposal materials 700 are filled into the receiving vessel.

Specifically, in a second filling operation into the receiving vessel, part of the animal excrement disposal materials 700 in the first granule region 710 and the animal excrement disposal materials 700 in the third granule region 730 are filled into the receiving vessel.

In this manner, the animal excrement disposal materials 700 in the receiving vessel are repeatedly replaced with new ones. In a third filling operation into the receiving vessel, part of the animal excrement disposal materials 700 in the first granule region 710 and the animal excrement disposal materials 700 in the fourth granule region 740 are filled into the receiving vessel. Further, in a fourth filling operation into the receiving vessel, part of the animal excrement disposal materials 700 in the first granule region 710 and the animal excrement disposal materials 700 in the fifth granule region 750 are filled into the receiving vessel.

Specifically, in any filling operation of the animal excrement disposal materials 700 into the receiving vessel, the animal excrement disposal materials 700 of the first granule region 710 are contained. As described above, in the first granule region 710, the particle size do not greatly vary between the upper and lower animal excrement disposal materials 700 (in the upward direction 200U and the downward direction 200D). Therefore, variation among the filling operations in the particle size of the animal excrement disposal materials 700 in the receiving vessel can be reduced.

The above-described second to fifth granule regions 720, 730, 740, 750 are theoretical regions. Therefore, in an actual product, the animal excrement disposal materials 700 may not necessarily form the regions as described above and may not be necessarily taken out from the container 200 in the above-described order.

### (Modifications)

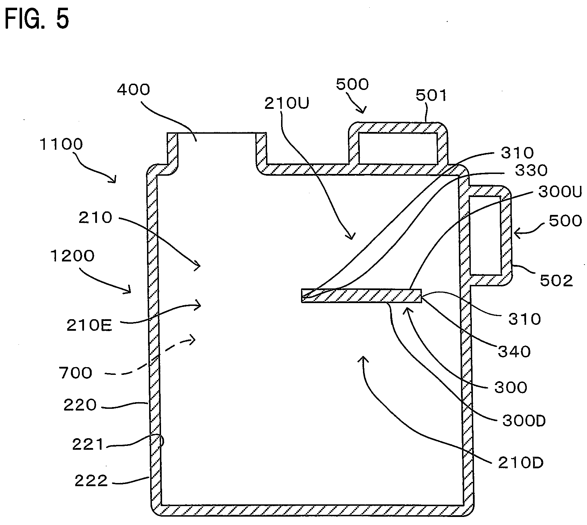

In the package 100 according to this invention, various modifications can be formed according to the desired structures of the container 200, the partition wall 300 and the animal excrement disposal materials 700 to be filled into the container 200. First to 17th modifications according to this invention are now described with reference to FIGS. 5 to 22. In the description of the first to 17th modifications, components identical to those of the package 100 with the above-described basic structure and components identical to those of the other modifications are not described.

### (First Modification)

A package 1100 according to the first modification is described with reference to FIG. 5. The package 1100 of the first modification is different from the package 100 of the above-described embodiment in the structure of the container. Specifically, in a container 1200 of the first modification, ends of the partition wall 300 in the second direction 200X are not connected to the inner wall 221. Therefore, in the container 1200, the ends of the partition wall 300 in the second direction 200X do not form the connected end 320, but form only the free ends 310.

In the container 1200, the partition wall 300 is provided to define the region 210U above the partition wall. Therefore, the package 1100 according to the first modification has the same effect as the package 100 of the above-described embodiment.

### (Second Modification)

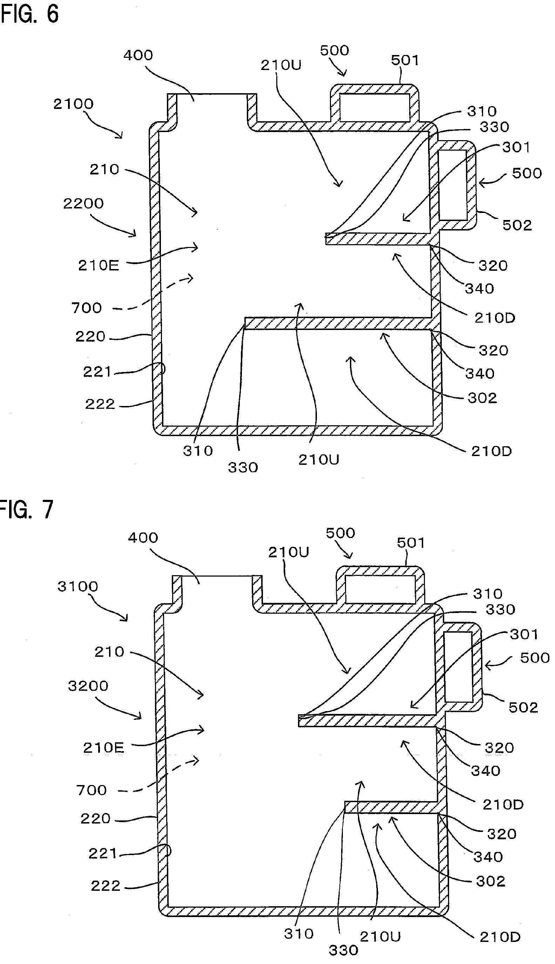

A package 2100 according to the second modification is described with reference to FIG. 6. The package 2100 of the second modification is different from the package 100 of the above-described embodiment in the structure of the container. Specifically, in a container 2200 of the second modification, the partition wall 300 includes a first partition wall 301 and a second partition wall 302. The first partition wall 301 is formed above the second partition wall 302 in the upward direction 200U. The length of the first partition wall 301 in the second direction 200X is shorter than that of the second partition wall 302.

In the container 2200, each of the first partition wall 301 and the second partition wall 302 is provided to define the region 210U above the partition wall. Therefore, the package 2100 according to the second modification has the same effect as the package 100 of the above-described embodiment.

In the second modification, the package 2100 is described as having the two partition walls 300, but, in this invention, three or more partition walls 300 may be provided in three or more positions.

### (Third Modification)

A package 3100 according to the third modification is described with reference to FIG. 7. The package 3100 of the third modification is different from the package 100 of the above-described embodiment in the structure of the container. Specifically, in a container 3200 of the third modification, the partition wall 300 includes a first partition wall 301 and a second partition wall 302. The first partition wall 301 is formed above the second partition wall 302 in the upward direction 200U. The length of the first partition wall 301 in the second direction 200X is longer than that of the second partition wall 302.

In the container 3200, each of the first partition wall 301 and the second partition wall 302 is provided to define the region 210U above the partition wall. Therefore, the package 3100 according to the third modification has the same effect as the package 100 of the above-described embodiment.

### (Fourth Modification)

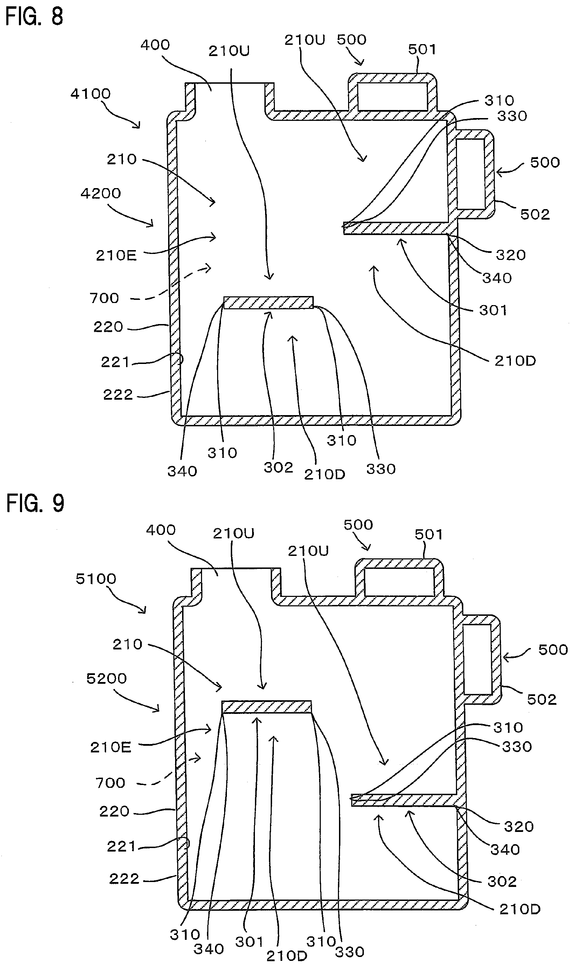

A package 4100 according to the fourth modification is described with reference to FIG. 8. The package 4100 of the fourth modification is different from the package 100 of the above-described embodiment in the structure of the container. Specifically, in a container 4200 of the fourth modification, the partition wall 300 includes a first partition wall 301 and a second partition wall 302. The first partition wall 301 is formed above the second partition wall 302 in the upward direction 200U. Ends of the first partition wall 301 in the second direction 200X form the connected end 320 connected to the inner wall 221 and the free end 310. Ends of the second partition wall 302 in the second direction 200X are not connected to the inner wall 221 and thus form the free ends 310.

In the container 4200, each of the first partition wall 301 and the second partition wall 302 is provided to define the region 210U above the partition wall. Therefore, the package 4100 according to the fourth modification has the same effect as the package 100 of the above-described embodiment.

### (Fifth Modification)

A package 5100 according to the fifth modification is described with reference to FIG. 9. The package 5100 of the fifth modification is different from the package 100 of the above-described embodiment in the structure of the container. Specifically, in a container 5200 of the fifth modification, the partition wall 300 includes a first partition wall 301 and a second partition wall 302. The first partition wall 301 is formed above the second partition wall 302 in the upward direction 200U. Ends of the first partition wall 301 in the second direction 200X are not connected to the inner wall 221 and thus form the free ends 310. Ends of the second partition wall 302 in the second direction 200X form the connected end 320 connected to the inner wall 221 and the free end 310.

In the container 5200, each of the first partition wall 301 and the second partition wall 302 is provided to define the region 210U above the partition wall. Therefore, the package 5100 according to the fifth modification has the same effect as the package 100 of the above-described embodiment.

### (Sixth Modification)

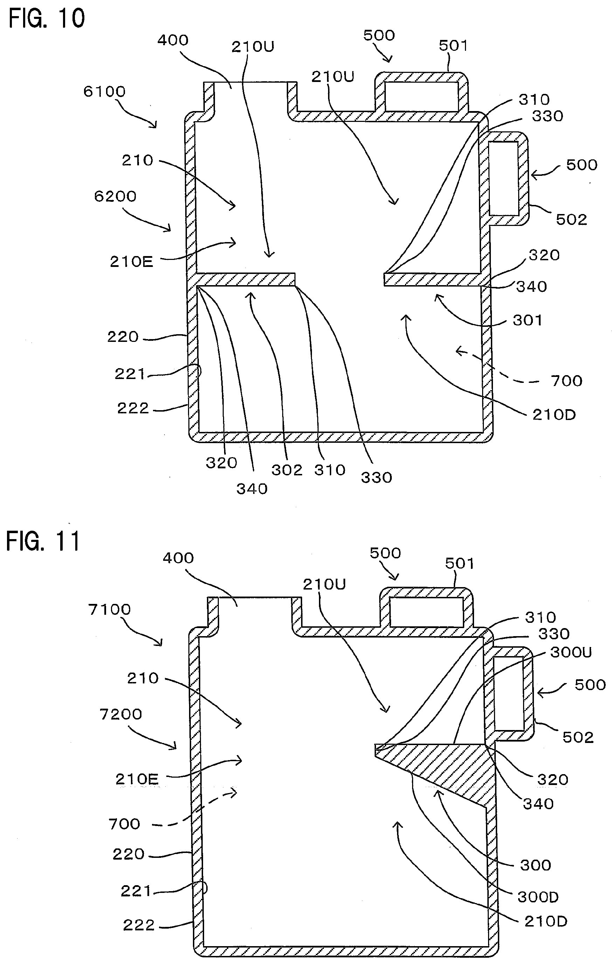

A package 6100 according to the sixth modification is described with reference to FIG. 10. The package 6100 of the sixth modification is different from the package 100 of the above-described embodiment in the structure of the container. Specifically, in a container 6200 of the sixth modification, the partition wall 300 includes a first partition wall 301 and a second partition wall 302. The first partition wall 301 and the second partition wall 302 are arranged on the same line in the second direction 200X. Ends of each of the first partition wall 301 and the second partition wall 302 in the second direction 200X form the connected end 320 connected to the inner wall 221 and the free end 310.

In the container 6200, each of the first partition wall 301 and the second partition wall 302 is provided to define the region 210U above the partition wall. Therefore, the package 6100 according to the sixth modification has the same effect as the package 100 of the above-described embodiment.

### (Seventh Modification)

A package 7100 according to the seventh modification is described with reference to FIG. 11. The package 7100 of the seventh modification is different from the package 100 of the above-described embodiment in the structure of the container. Specifically, in a container 7200 of the seventh modification, the second partition wall surface 300D of the partition wall 300 has an inclined component inclined with respect to the second direction 200X. More specifically, the inclined component of the second partition wall surface 300D is inclined with respect to the second direction 200X in the upward direction 200U from the connected end 320 (the proximal end 340) toward the free end 310 (the distal end 330). To "have an inclined component in a certain direction" in this invention is to have an element inclined with respect to the certain direction. In this case, the element does not necessarily have to have an inclined region, but it is only necessary for the overall structure of the element to be inclined with respect to the certain direction. For example, it is assumed that the second partition wall surface 300D of the container 7200 in the seventh modification has a stepped configuration. In this case, the "stepped" configuration is formed only by an element parallel to the first and second directions 200Y, 200X. Even in such a case, considering the "stepped" configuration as a whole, it is configured to be inclined with respect to the second direction 200X. Therefore, even in the case of such a "stepped" configuration, the second partition wall surface 300D can be considered as having an inclined component inclined with respect to the second direction 200X as a whole.

In the container 7200, the partition wall 300 is provided to define the region 210U above the partition wall. Therefore, the package 7100 according to the seventh modification has the same effect as the package 100 of the above-described embodiment.

### (Eighth Modification)

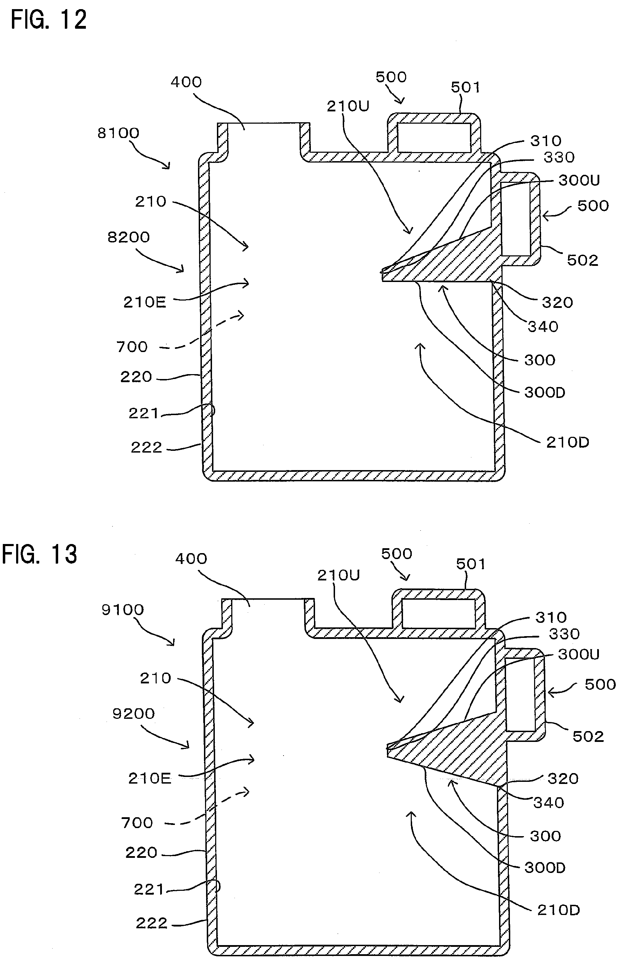

A package 8100 according to the eighth modification is described with reference to FIG. 12. The package 8100 of the eighth modification is different from the package 100 of the above-described embodiment in the structure of the container. Specifically, in a container 8200 of the eighth modification, the first partition wall surface 300U of the partition wall 300 has an inclined component inclined with respect to the second direction 200X. More specifically, the inclined component of the first partition wall surface 300U is inclined with respect to the second direction 200X in the downward direction 200D from the connected end 320 (the proximal end 340) toward the free end 310 (the distal end 330).

In the container 8200, the partition wall 300 is provided to define the region 210U above the partition wall. Therefore, the package 8100 according to the eighth modification has the same effect as the package 100 of the above-described embodiment.

### (Ninth Modification)

A package 9100 according to the ninth modification is described with reference to FIG. 13. The package 9100 of the ninth modification is different from the package 100 of the above-described embodiment in the structure of the container. Specifically, in a container 9200 of the ninth modification, each of the first partition wall surface 300U and the second partition wall surface 300D of the partition wall 300 has an inclined component inclined with respect to the second direction 200X. More specifically, the inclined component of the first partition wall surface 300U is inclined with respect to the second direction 200X in the downward direction 200D from the connected end 320 (the proximal end 340) toward the free end 310 (the distal end 330). The inclined component of the second partition wall surface 300D is inclined with respect to the second direction 200X in the upward direction 200U from the connected end 320 (the proximal end 340) toward the free end 310 (the distal end 330).

In the container 9200, the partition wall 300 is provided to define the region 210U above the partition wall. Therefore, the package 9100 according to the ninth modification has the same effect as the package 100 of the above-described embodiment.

### (Tenth Modification)

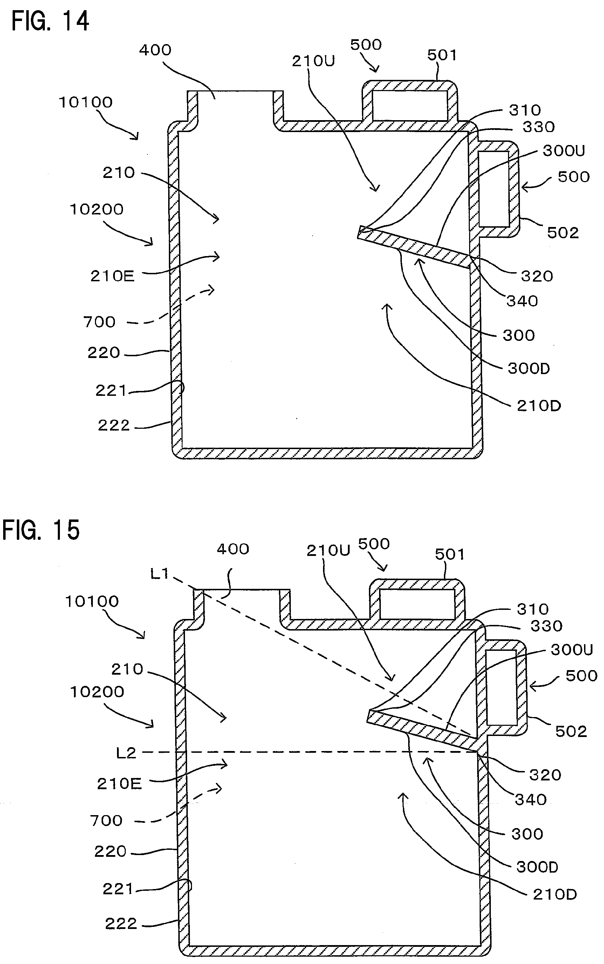

A package 10100 according to the tenth modification is described with reference to FIGS. 14 and 15. The package 10100 of the tenth modification is different from the package 100 of the above-described embodiment in the structure of the container. Specifically, in a container 10200 of the tenth modification, the first and second partition wall surfaces 300U, 300D of the partition wall 300 have an inclined component inclined with respect to the second direction 200X. More specifically, the inclined component of the first partition wall surface 300U is inclined with respect to the second direction 200X in the upward direction 200U from the connected end 320 (the proximal end 340) toward the free end 310 (the distal end 330). The inclined component of the second partition wall surface 300D is inclined with respect to the second direction 200X in the upward direction 200U from the connected end 320 (the proximal end 340) toward the free end 310 (the distal end 330). In such a structure, it can be said that the partition wall 300 has an inclined component inclined with respect to the second direction 200X as a whole.

In the container 10200, the partition wall 300 is provided to define the region 210U above the partition wall. Therefore, the package 10100 according to the tenth modification has the same effect as the package 100 of the above-described embodiment.

A suitable example of the partition wall 300 which has an inclined component inclined in the upward direction 200U from the connected end 320 (the proximal end 340) toward the free end 310 (the distal end 330) as a whole is now explained with reference to FIG. 15.

The shortest line extending from the connected end 320 (the proximal end 340) of the first partition wall surface 300U and passing through a region of the opening 400 located closest to the first container region 211 is defined as a first virtual line L1. Further, a line extending parallel to the second direction X through the connected end 320 (the proximal end 340) of the second partition wall surface 300D is defined as a second virtual line L2. The partition wall 300 is preferably inclined to be located between the first and second virtual lines L1 and L2. Specifically, with such a structure, even if the container 10100 is tilted, the animal excrement disposal materials in the region 210U above the partition wall are prevented from easily flowing out to the opening 400. Therefore, such a structure can prevent most of the animal excrement disposal materials in the region 210U above the partition wall from being taken out of the container 10100 in an early stage of taking out the animal excrement disposal materials.

### (11th Modification)

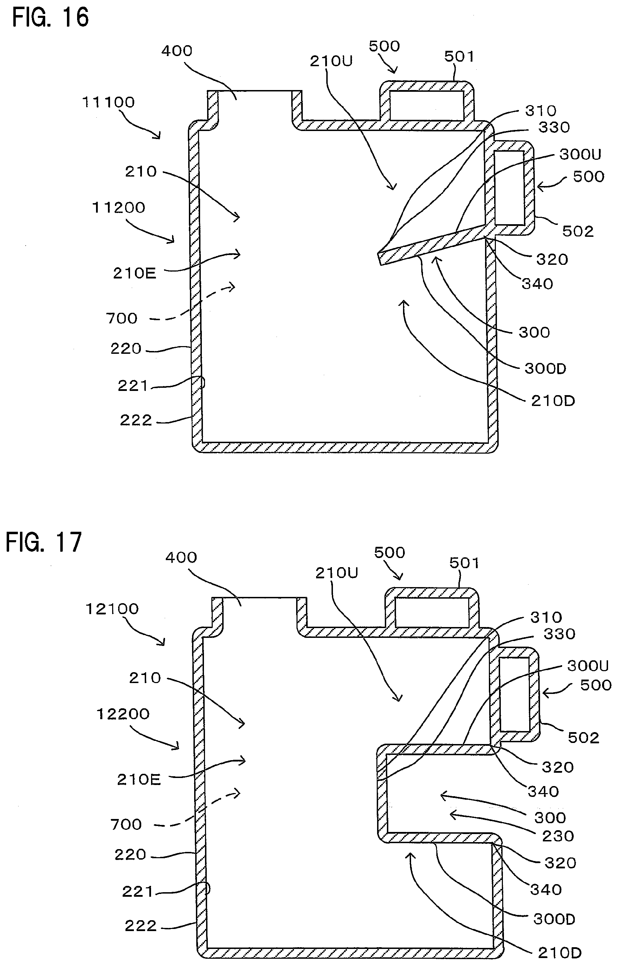

A package 11100 according to the 11th modification is described with reference to FIG. 16. The package 11100 of the 11th modification is different from the package 100 of the above-described embodiment in the structure of the container. Specifically, in a container 11200 of the 11th modification, the first and second partition wall surfaces 300U, 300D of the partition wall 300 have an inclined component inclined with respect to the second direction 200X. More specifically, the inclined component of the first partition wall surface 300U is inclined with respect to the second direction 200X in the downward direction 200D from the connected end 320 (the proximal end 340) toward the free end 310 (the distal end 330). Further, the inclined component of the second partition wall surface 300D is inclined with respect to the second direction 200X in the downward direction 200U from the connected end 320 (the proximal end 340) toward the free end 310 (the distal end 330). In such a structure, it can be said that the partition wall 300 has an inclined component inclined with respect to the second direction 200X as a whole.

In the container 11200, the partition wall 300 is provided to define the region 210U above the partition wall. Therefore, the package 11100 according to the 11th modification has the same effect as the package 100 of the above-described embodiment.

### (12th Modification)

A package 12100 according to the 12th modification is described with reference to FIG. 17. The package 12100 of the 12th modification is different from the package 100 of the above-described embodiment in the structure of the container. Specifically, in a container 12200 of the 12th modification, the wall 220 has a recess 230. The partition wall 300 is formed by the recess 230. The recess 230 has an upper surface formed by the inner wall surface 221 in the upward direction 200U. This upper surface forms a first partition wall surface 300U. The first partition wall surface 300U is formed in parallel to the second direction X. The recess 230 has a lower surface formed by the inner wall surface 221 in the downward direction 200D. This lower surface forms a second partition wall surface 300D. The second partition wall surface 300D is formed in parallel to the second direction X.

In the container 12200, the partition wall 300 is provided to define the region 210U above the partition wall. Therefore, the package 12100 according to the 12th modification has the same effect as the package 100 of the above-described embodiment.

### (13th Modification)

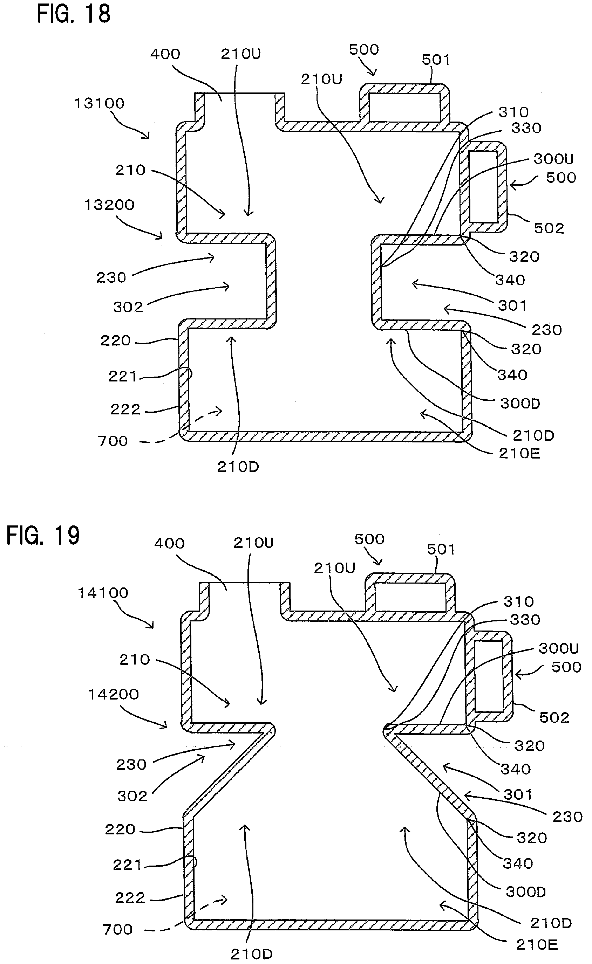

A package 13100 according to the 13th modification is described with reference to FIG. 18. The package 13100 of the 13th modification is different from the package 100 of the above-described embodiment in the structure of the container. Specifically, in a container 13200 of the 13th modification, like the container 12200 of the 12th modification, the partition wall 300 is formed by the recess 230 of the wall 220. In the container 13200 of the 13th modification, two such recesses 230 are formed. A first partition wall 301 and a second partition wall 302 are formed as the partition wall 300 by the two recesses 230.

In the container 13200, the partition wall 300 is provided to define the region 210U above the partition wall. Therefore, the package 13100 according to the 13th modification has the same effect as the package 100 of the above-described embodiment.

The 13th modification is described as having two partition walls 300 formed by the recesses 230, but three or more partition walls 300 may be formed. In this case, a number of the recesses 230 corresponding to a desired number of the partition walls 300 can be formed in the container.

### (14th Modification)

A package 14100 according to the 14th modification is described with reference to FIG. 19. The package 14100 of the 14th modification is different from the package 100 of the above-described embodiment in the structure of the container. Specifically, in a container 14200 of the 14th modification, like the container 12200 of the 12th modification, the partition wall 300 is formed by the recess 230 of the wall 220. In the container 14200 of the 14th modification, two such recesses 230 are formed. A first partition wall 301 and a second partition wall 302 are formed as the partition wall 300 by the two recesses 230. In the container 14200, the second partition wall surface 300D has an inclined component inclined with respect to the second direction 200X. The inclined component of the second partition wall surface 300D is inclined with respect to the second direction 200X in the upward direction 200U from the connected end 320 (the proximal end 340) toward the free end 310 (the distal end 330).

In the container 14200, the partition wall 300 is provided to define the region 210U above the partition wall. Therefore, the package 14100 according to the 14th modification has the same effect as the package 100 of the above-described embodiment.

As exemplified by the package 14100 of the 14th modification, the shape of the recess 230 can be modified such that the first partition wall surface 300U and the second partition wall surface 300D have an inclined component inclined with respect to the second direction 200X.

### (15th Modification)

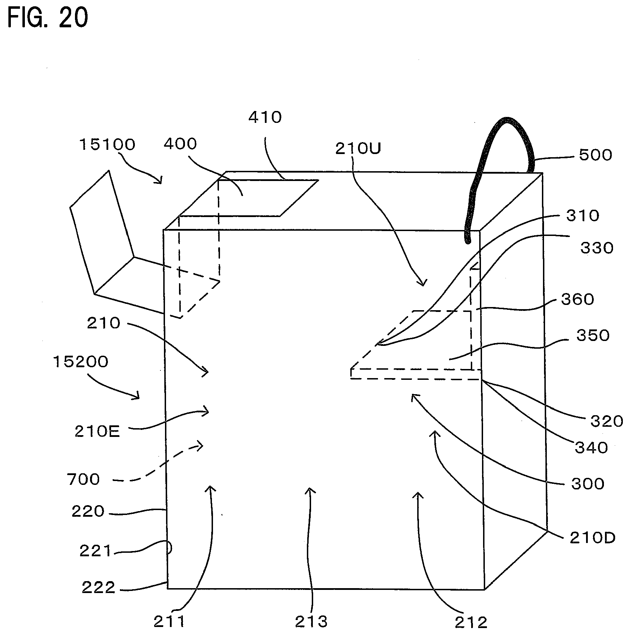

A package 15100 according to the 15th modification is described with reference to FIG. 20. The package 15100 of the 15th modification is different from the package 100 of the above-described embodiment in the structure of the container. Specifically, a container 15200 of the 15th modification is formed of corrugated cardboard. The opening 400 of the container 15200 is formed by a notch or cutout part 410 formed in the first container region 211. The grip 500 of the container 15200 is formed by a string arranged on the second container region 212. The partition wall 300 includes a main part 350 which forms the first partition wall surface 300U and the second partition wall surface 300D and a bonded part 360 which is bonded to the inner wall surface 221 of the container 15200.

In the container 15200, the partition wall 300 is provided to define the region 210U above the partition wall. Therefore, the package 15100 according to the 15th modification has the same effect as the package 100 of the above-described embodiment.

### (16th Modification)

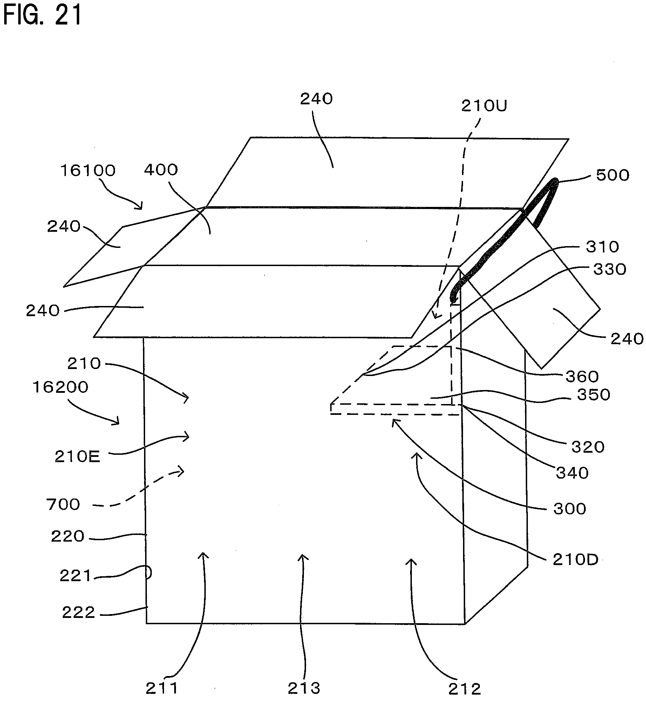

A package 16100 according to the 16th modification is described with reference to FIG. 21. The package 16100 of the 16th modification is different from the package 100 of the above-described embodiment in the structure of the container. Specifically, like the container 15200 of the 15th modification, a container 16200 of the 16th modification is formed of corrugated cardboard. Flaps 240 are formed on the top of the container 16200 of the 16th modification (in the upward direction 200U). A number of the flaps 240 equal to that of the upper edges of the container 16200 (in the upward direction 200U) are provided. The container 16200 of the 16th modification has four flaps 240. The top of the container 16200 (in the upward direction 200U) is closed by folding the flaps 240 toward the container region 210. On the other hand, the opening 400 is formed by unfolding the flaps 240. Further, the partition wall 300 of the 16th modification is the same as that of the 15th modification.

In the container 16200, the partition wall 300 is provided to define the region 210U above the partition wall. Therefore, the package 16100 according to the 16th modification has the same effect as the package 100 of the above-described embodiment.

### (17th Modification)

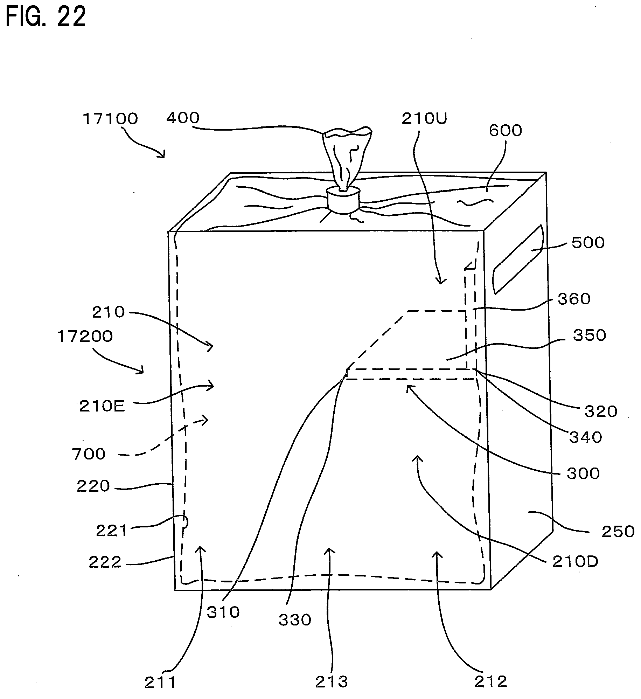

A package 17100 according to the 17th modification is described with reference to FIG. 22. The package 17100 of the 17th modification is different from the package 100 of the above-described embodiment in the structure of the container. Specifically, like the container 15200 of the 15th modification, a container 17200 of the 17th modification is formed of corrugated cardboard. The container 17200 has an outer body 250 formed of corrugated cardboard and a bag 600 disposed within the outer body 250. Therefore, the outer wall 222 is formed by the outer body 250, and the inner wall 221 is formed by the bag 600. The opening 400 is formed by an opening of the bag 600. The grip 500 is formed by a hole formed in the outer body 250. The partition wall 300 has a main part 350 and a bonded part 360 like in the container 15200 of the 15th modification. The bonded part 360 is bonded to the inner wall 221 formed by the bag 600.

In the container 17200, the partition wall 300 is provided to define the region 210U above the partition wall. Therefore, the package 17100 according to the 17th modification has the same effect as the package 100 of the above-described embodiment.

The package and the container for animal excrement disposal materials according to the present invention are not limited to those as described above. The structures described in the above-described embodiment and first to 17th modifications can be appropriately applied in combination.

### (Correspondences between the features of the embodiments and the features of the invention)

The package 100, 1100, 2100, 3100, 4100, 5100, 6100, 7100, 8100, 9100, 10100, 11100, 12100, 13100, 14100, 15100, 16100, 17100 is an example embodiment that corresponds to the "package" according to the present invention. The animal excrement disposal material 700 is an example embodiment that corresponds to the "animal excrement disposal material" according to the present invention. The container 200, 1200, 2200, 3200, 4200, 5200, 6200, 7200, 8200, 9200, 10200, 11200, 12200, 13200, 14200, 15200, 16200, 17200 is an example embodiment that corresponds to the "container" according to the present invention. The upward direction 200U and the downward direction 200D are example embodiments that correspond to the "upward direction" and the "downward direction", respectively, according to the present invention. The first direction 200Y and the second direction 200X are example embodiments that correspond to the "first direction" and the "second direction", respectively, according to the present invention. The inner wall 221, the container region 210 and the partition wall 300 are example embodiments that correspond to the "inner wall", the "container region" and the "partition wall", respectively, according to the present invention. The free end 310, the first partition wall surface 300U and the second partition wall surface 300D are example embodiments that correspond to the "free end", the "first partition wall surface" and the "second partition wall surface", respectively, according to the present invention. The proximal end 340 and the distal end 330 are example embodiments that correspond to the "proximal end" and the "distal end", respectively, according to the present invention. The region 210U above the partition wall and the region 210E other than above the partition wall are example embodiments that correspond to the "region above the partition wall" and the "region other than above the partition wall", respectively, according to the present invention. The first container region 211, the second container region 212 and the third container region 213 are example embodiments that correspond to the "first container region", the "second container region" and the "third container region", respectively, according to the present invention.

### In view of the nature of the above-described invention, various features can be provided as follows.

### (Aspect 1)

A package for animal excrement disposal materials, including granular animal excrement disposal materials and a container for containing the animal excrement disposal materials, wherein:
the container extends in an upward direction and a downward direction in a placed state of the container, a first direction defined by the upward direction and the downward direction, and a second direction defined by a direction crossing the first direction, and
the container includes a container region for containing the animal excrement disposal materials, an inner wall which defines the container region, and a partition wall which is formed in the container region and has an extending component in the second direction.

### (Aspect 2)

The package for animal excrement disposal materials as defined in aspect 1, wherein the partition wall has a free end which is not connected to the inner wall, a first partition wall surface on an upper side (in the upward direction) and a second partition wall surface on a side opposite to the first partition wall surface.

### (Aspect 3)

The package for animal excrement disposal materials as defined in aspect 1 or 2, wherein the container region has a region above the partition wall or above the first partition wall surface and a region other than above the partition wall or other than said region above the partition wall.

### (Aspect 4)

The package for animal excrement disposal materials as defined in any one of aspects 1 to 3, wherein the animal excrement disposal materials include first granules disposed in the region above the partition wall and second granules disposed in the region other than above the partition wall, and wherein the first granules have a larger average particle size than the second granules.

### (Aspect 5)

The package for animal excrement disposal materials as defined in any one of aspects 1 to 4, wherein the first partition wall surface has an inclined component in the second direction.

### (Aspect 6)

The package for animal excrement disposal materials as defined in any one of aspects 1 to 5, wherein the second partition wall surface has an inclined component in the second direction.

### (Aspect 7)

The package for animal excrement disposal materials as defined in any one of aspects 1 to 6, wherein the partition wall has a proximal end adjacent to the inner wall, and a distal end farther apart from the inner wall than the proximal end.

### (Aspect 8)

The package for animal excrement disposal materials as defined in any one of aspects 1 to 7, wherein the container has a first container region on the distal end side as viewed from the proximal end in the second direction, a second container region on the proximal end side as viewed from the distal end in the second direction, and a third container region including a midpoint in the second direction.

### (Aspect 9)

The package for animal excrement disposal materials as defined in any one of aspects 1 to 8, wherein the container has an opening for taking out the animal excrement disposal materials.

### (Aspect 10)

The package for animal excrement disposal materials as defined in aspect 9, wherein the opening is formed in the first container region.

### (Aspect 11)

The package for animal excrement disposal materials as defined in aspect 9, wherein the opening is formed in the third container region.

### (Aspect 12)

The package for animal excrement disposal materials as defined in any one of aspects 1 to 9, wherein the container has a grip for holding the container.

### (Aspect 13)

The package for animal excrement disposal materials as defined in aspect 12, wherein the grip is formed in the second container region.

### (Aspect 14)

The package for animal excrement disposal materials as defined in aspect 12, wherein the grip is formed in the third container region.

### (Aspect 15)

The package for animal excrement disposal materials as defined in any one of aspects 1 to 14, wherein a plurality of such partition walls are provided.

### (Aspect 16)

The package for animal excrement disposal materials as defined in any one of aspects 1 to 15, wherein the partition wall is integrally formed with the inner wall.

### (Aspect 17)

The package for animal excrement disposal materials as defined in any one of aspects 1 to 15, wherein the partition wall is formed by being bonded to the inner wall.

### (Aspect 18)

The package for animal excrement disposal materials as defined in any one of aspects 1 to 17, wherein the animal excrement disposal materials are intended for cats.

### (Aspect 19)

A container for containing granular animal excrement disposal materials, wherein:
the container extends in an upward direction and a downward direction in a placed state of the container, a first direction defined by the upward direction and the downward direction, and a second direction defined by a direction crossing the first direction, and
the container includes a container region for containing the animal excrement disposal materials, an inner wall which defines the container region, and a partition wall which is formed in the container region and has an extending component in the second direction.

### Description of the Numerals

100, 1100, 2100, 3100, 4100, 5100, 6100, 7100, 8100, 9100, 10100, 11100, 12100, 13100, 14100,
15100, 16100, 17100 package (package for animal excrement disposal materials)
200, 1200, 2200, 3200, 4200, 5200, 6200, 7200, 8200, 9200, 10200, 11200, 12200, 13200, 14200,
15200, 16200, 17200 container
200U upward direction
200D downward direction
200Y first direction
200X second direction
200Z third direction
210 container region
210E region other than above the partition wall
210U region above the partition wall
210D region below the partition wall
211 first container region
212 second container region
213 third container region
220 wall
221 inner wall
222 outer wall
230 recess
240 flap
250 outer body
300 partition wall
300U first partition wall surface
300D second partition wall surface
301 first partition wall
302 second partition wall
310 free end
320 connected end
330 distal end
340 proximal end
350 main body
360 bonded part
400 opening
410 cutout part
500 grip
501 first grip
502 second grip
600 bag
700 granule
701 first granule
702 second granule
710 first granule region
720 second granule region
730 third granule region
740 fourth granule region
750 fifth granule region
L1 first virtual line
L2 second virtual line

## Claims

1. A package for animal excrement disposal materials, including granular animal excrement disposal materials and a container for containing the animal excrement disposal materials, wherein:
the container extends in an upward direction and a downward direction in a placed state of the container, a first direction defined by the upward direction and the downward direction, and a second direction defined by a direction crossing the first direction, and
the container includes a container region for containing the animal excrement disposal materials, an inner wall which defines the container region, and a partition wall which is formed in the container region and has an extending component in the second direction.

2. The package for animal excrement disposal materials as defined in claim 1, wherein the partition wall has a free end which is not connected to the inner wall, a first partition wall surface on an upper side (in the upward direction) and a second partition wall surface on a side opposite to the first partition wall surface, and wherein the container region has a region above the partition wall or above the first partition wall surface and a region other than above the partition wall or other than said region above the partition wall.

3. The package for animal excrement disposal materials as defined in claim 2, wherein the animal excrement disposal materials include first granules disposed in the region above the partition wall and second granules disposed in the region other than above the partition wall, and wherein the first granules have a larger average particle size than the second granules.

4. The package for animal excrement disposal materials as defined in claim 2 or 3, wherein the first partition wall surface has an inclined component in the second direction.

5. The package for animal excrement disposal materials as defined in any one of claims 2 to 4, wherein the second partition wall surface has an inclined component in the second direction.

6. The package for animal excrement disposal materials as defined in any one of claims 1 to 5, wherein the partition wall has a proximal end adjacent to the inner wall, and a distal end farther apart from the inner wall than the proximal end, and wherein the container has a first container region on the distal end side as viewed from the proximal end in the second direction, a second container region on the proximal end side as viewed from the distal end in the second direction, and a third container region including a midpoint in the second direction.

7. The package for animal excrement disposal materials as defined in any one of claims 1 to 6, wherein the container has an opening for taking out the animal excrement disposal materials.

8. The package for animal excrement disposal materials as defined in claim 7, wherein the opening is formed in the first container region.

9. The package for animal excrement disposal materials as defined in claim 7, wherein the opening is formed in the third container region.

10. The package for animal excrement disposal materials as defined in any one of claims 1 to 9, wherein the container has a grip for holding the container.

11. The package for animal excrement disposal materials as defined in any one of claims 1 to 10, wherein a plurality of such partition walls are provided.

12. A container for containing granular animal excrement disposal materials, wherein:
the container extends in an upward direction and a downward direction in a placed state of the container, a first direction defined by the upward direction and the downward direction, and a second direction defined by a direction crossing the first direction, and
the container includes a container region for containing the animal excrement disposal materials, an inner wall which defines the container region, and a partition wall which is formed in the container region and has an extending component in the second direction.
